# FASCICULE DE BREVET EUROPEEN

(11) **EP 0 400 520 B1**
(45) Date de publication et mention de la délivrance du brevet: **13.04.1994**
(21) Numéro de dépôt: 90110053.7
(22) Date de dépôt: 28.05.1990
(51) Int. Cl.: H04L 1/20

(54) **Dispositif de détection de perte de signal de réception pour récepteur de signaux numériques**
Schaltungsanordnung zur Detektion des Verlustes eines digitalen, empfangenen Signals für digitale Signalempfänger
Receiving signal drop-out detecting device for digital signal receiver

(30) Priorité: 31.05.1989 FR 8907180
(43) Date de publication de la demande: 05.12.1990
(73) Titulaire: ALCATEL CIT, 75008 Paris (FR)
(72) Inventeur: Bardin, Jean, F-75645 Paris Cedex (FR)
(74) Mandataire: Weinmiller, Jürgen

(56) Documents cités:
- DE-A- 3 441 227
- US-A- 4 486 855
- IBM TECHNICAL DISCLOSURE BULLETIN, vol. 25, no. 7B, décembre 1982, pages 3956-3960, New York, US; D.V. COUDEN et al.: "Signal detection circuit for Peer-to-Peer rings"

## Description

La présente invention concerne un dispositif de détection de perte de signal de réception pour récepteur de signaux numériques.

Dans un système de transmission de signaux numériques, il est nécessaire de procéder, entre autres, à une détection de perte de signal reçu par l'équipement récepteur, cette perte de signal pouvant provenir d'une défaillance de l'équipement émetteur ou d'une défaillance du support de transmission utilisé entre l'équipement émetteur et l'équipement récepteur.

Une méthode utilisée pour cela est décrite par exemple dans la demande de brevet français n° 2 525 839 et consiste à effectuer en analogique une intégration du signal numérique reçu, suivie d'une comparaison avec un seuil, une réception correcte se traduisant en effet par une valeur moyenne constante en sortie de l'intégrateur, et une perte de signal se traduisant par une diminution ou une augmentation du niveau du signal de sortie de l'intégrateur par rapport à cette valeur moyenne suivant que la perte de signal numérique se traduit par un niveau logique constant à "o" ou à "1" en entrée de l'équipement récepteur. Un exemple supplémentaire d'un dispositif de détection de perte de signal de réception pour récepteur de signaux numériques est illustré par le document US-A-4 486 855.

La présente invention utilise la présence, à l'intérieur d'un récepteur de signaux numériques d'un dispositif de reconstitution de signal d'horloge de réception. On sait qu'il existe deux façons de procéder pour reconstituer un signal d'horloge de réception dont l'une utilise essentiellement une horloge locale remise en phase par les transitions du signal de réception, et dont l'autre procède essentiellement par traitement direct du signal de réception, plus précisément par traitement spectral de ce dernier, en vue d'extraire la raie correspondant à la fréquence recherchée.

Par nature un dispositif du deuxième type fournit, contrairement au premier type, un signal d'horloge reconstitué qui est tel qu'une perte de signal de réception se traduit par une absence d'impulsions de ce signal d'horloge de réception, sans toutefois que cette propriété ait été jusqu'à présent recherchée en soi, ou utilisée pour résoudre un problème particulier.

La présente invention met par contre à profit cette propriété pour résoudre de façon particulièrement simple le problème de détection de perte de signal de réception.

La présente invention a également pour objet un dispositif de détection de perte de signal de réception qui soit numérique et donc facilement intégrable.

La présente invention a également pour objet un dispositif permettant de détecter une reprise de signal reçu au bout d'un certain nombre de périodes d'observation de ce signal marquées par une absence de perte de signal.

Suivant l'invention, un dispositif de détection de perte de signal de réception pour récepteur de signaux numériques comportant un dispositif de reconstitution d'horloge de réception est essentiellement caractérisé en ce qu'il comporte :
- une horloge locale plésiochrone avec le signal d'horloge de réception, ce dernier étant reconstitué de manière à présenter une absence d'impulsions en cas de perte de signal de réception,
- des moyens de détection d'au moins une impulsion du signal d'horloge de réception au cours d'une fenêtre d'observation de ce signal incluant un nombre déterminé d'impulsions du signal d'horloge locale,
- des moyens de comparaison du résultat de cette détection par rapport à un état prédéterminé attendu en cas de perte de signal do réception ou en cas d'absence de perte de signal de réception.

D'autres objets et caractéristiques de la présente invention apparaîtront plus clairement à la lecture de la description suivante d'exemples de réalisation, faite en relation avec les dessins ci-annexés dans lesquels :
- La figure 1 est un schéma d'un dispositif de détection de perte ou de reprise de signal de réception suivant l'invention.
- Les figures 2a et 2b sont des chronogrammes illustrant respectivement le fonctionnement du dispositif représenté sur la figure 1, dans le cas d'une absence de détection de perte de signal de réception et dans le cas d'une détection de perte de signal de réception.
- La figure 3 est un chronogramme illustrant le fonctionnement du dispositif représenté sur la figure 1, dans le cas d'une reprise de signal de réception.
- La figure 4 est un schéma d'un autre dispositif de détection de perte de signal de réception suivant l'invention.

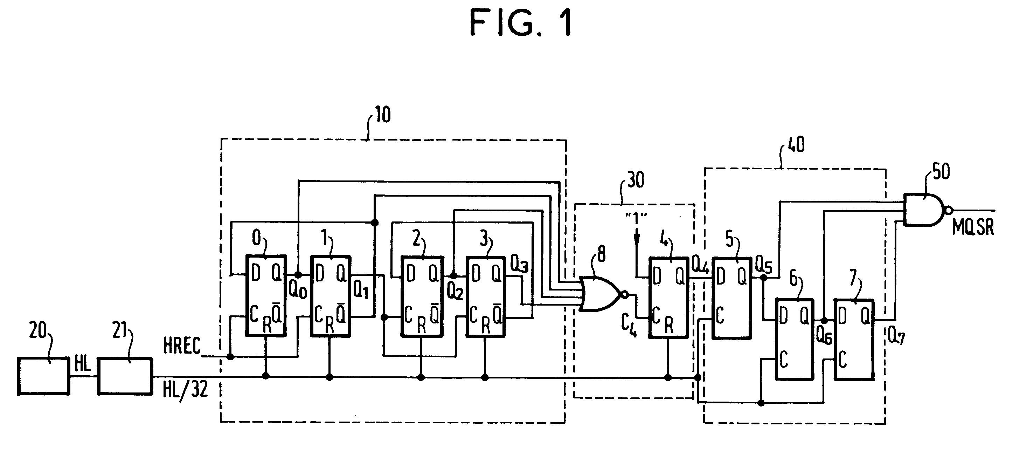

Le dispositif de détection de perte ou de reprise de signal de réception représenté sur la figure 1 fait partie d'un équipement de réception de données numériques (non représenté) réalisant de façon connue, entre autres fonctions, une reconstitution de signal d'horloge de réception à partir du signal de données reçues.

Le dispositif de détection de perte ou de reprise de signal de réception suivant l'invention utilise plus particulièrement un signal d'horloge de réception reconstitué HREC tel qu'une perte de signal de réception se traduise par une absence d'impulsion de ce signal d'horloge de réception. Une telle reconstitution de signal d'horloge de réception ne constitue pas l'objet de la présente invention et ne sera donc pas décrite.

Le dispositif de détection de perte ou de reprise de signal de réception représenté sur la figure 1 comporte des moyens de comptage 10 pour compter les impulsions de ce signal d'horloge de réception reconstitué HREC comprises dans une fenêtre de comptage comportant un nombre A d'impulsions d'un signal d'horloge locale HL, fourni par une horloge locale 20, plésiochrone avec le signal d'horloge de réception reconstitué HREC ; à titre d'exemple, le nombre A sera pris dans la suite de la description égal à seize, une fenêtre de comptage étant elle même prise égale à une demi-période d'un signal HL/32 obtenu par division par 32 de la fréquence du signal HL au moyen d'un diviseur de fréquence 21.

Ce dispositif de détection de perte de signal de réception comporte également des moyens 30 de détection de passage de ces moyens de comptage par un état de comptage prédéterminé au plus égal à A-1, c'est-à-dire ici quinze, au cours d'une fenêtre de comptage, auquel cas le signal de sortie de ces moyens 30 indique une absence de perte de signal de réception, une perte de signal de réception étant indiquée dans le cas contraire.

Dans l'exemple considéré cette détection de perte de signal est effectuée une demi-période sur deux du signal d'horloge HL/32, cette demi-période constituant ladite fenêtre de comptage, et l'autre demi-période étant utilisée pour la remise à zéro des moyens de comptage 10.

Ces moyens de comptage 10 consistent en l'occurrence en un compteur par seize, formé par quatre bascules 0, 1, 2, 3 du type "D" mises en cascade.

Toutes ces bascules ont leur entrée de remise à zéro R qui reçoit le signal d'horloge locale HL/32.

Les deux premières bascules, référencées 0 et 1, ont leur entrée d'horloge C qui reçoit le signal d'horloge de réception HREC. La bascule 0 a son entrée D connectée à la sortie Q̅ de la bascule 1, et la bascule 1 a son entrée D connectée à la sortie Q de la bascule 0. Les deux bascules suivantes, 2 et 3, ont leur entrée d'horloge C connectée a la sortie Q de la bascule 1. La bascule 2 a son entrée D connectée à la sortie Q̅ de la bascule 3, et la bascule 3 a son entrée D connectée à la sortie Q de la bascule 2.

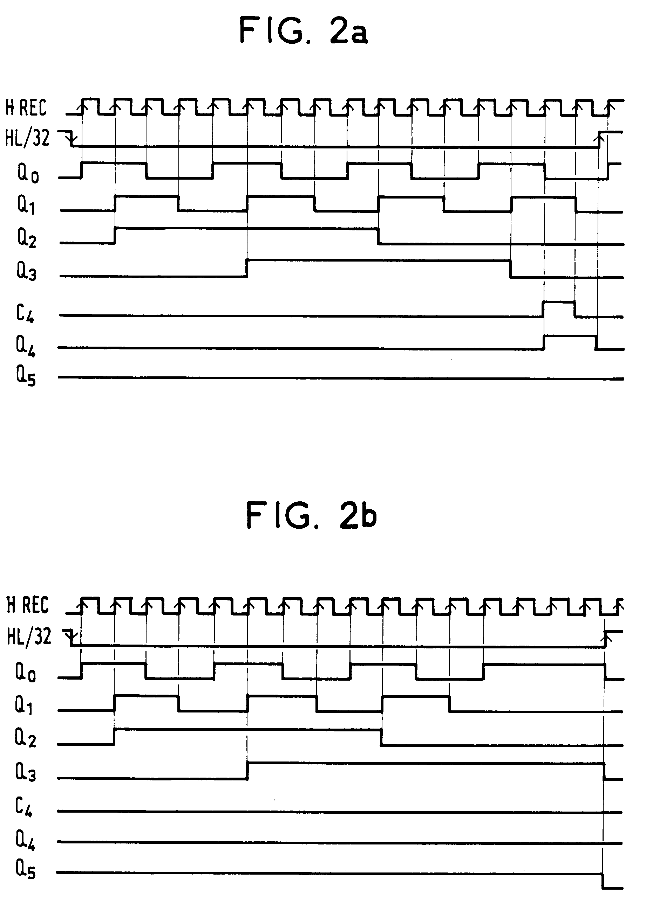

Ce compteur commence à compter au début d'une fenêtre de comptage correspondant en l'occurrence à un front descendant du signal HL/32. Les signaux Qo, Q1, Q2, Q3 disponibles respectivement sur les sorties Q des bascules 0, 1, 2 et 3 au cours d'une fenêtre de comptage ont été représentés sur les figures 2a et 2b, respectivement pour une fenêtre de comptage marquée par une absence de perte de signal de réception, et pour une fenêtre de comptage marquée par une perte de signal de réception.

L'état de comptage "quinze" de ce compteur étant seul défini par un état logique "0, 0, 0, 0" des sorties Qo, Q̅1, Q2, Q3, les moyens de détection 30 de passage par l'état de comptage quinze au cours d'une fenêtre de comptage comportent une bascule 4 du type "D" dont l'entrée R de remise à zéro reçoit le signal d'horloge locale HL/32, dont l'entrée D est mise au niveau logique "1", et dont l'entrée d'horloge C est connectée à la sortie d'un circuit de décodage de l'état de comptage quinze, constitué en l'occurrence d'une porte 8 du type "non OU" à quatre entrées connectées aux sorties Qo, Q̅1, Q2, Q3.

Les signaux C4 et Q4 disponibles sur l'entrée d'horloge C et sur la sortie Q de la bascule 4 ont également été représentés sur les figures 2a et 2b. Le signal C4 est, dans le cas d'une absence de perte de signal de réception, au niveau logique "1" entre le front avant de la quinzième impulsion et le front avant de la seizième impulsion du signal HREC, et le signal Q4 au niveau logique "1" entre le front avant de la quinzième impulsion du signal HREC et le front montant du signal HL/32 correspondant à la fin de la fenêtre de comptage, et pouvant intervenir à priori à tout moment au cours de la seizième impulsion du signal HREC (les signaux HREC et HL étant plésiochrones).

Ce signal Q4 constitue le signal de sortie des moyens de détection 30. Dans le cas d'une perte de signal de réception, ce signal Q4 est au niveau logique "0" en fin de fenêtre de comptage.

Pour détecter une reprise de signal, après détection d'une perte de signal, le dispositif représenté sur la figure 1 comporte en outre des moyens 40 de mémorisation du signal de sortie des moyens de détection 30 sur trois fenêtres de comptage consécutives et des moyens 50 de détection d'un état des signaux ainsi mémorisé correspondant à une absence de perte de signal de réception pour chacune de ces trois fenêtres consécutives, auquel cas le signal de sortie de ces moyens de détection 50 indique une reprise du signal de réception, ce signal continuant à indiquer une perte de signal dans le cas contraire.

Les moyens de mémorisation 40 consistent en un registre à décalage formé de trois bascules du type "D" 5, 6, 7. Ces trois bascules ont leur entrée d'horloge C qui reçoit le signal d'horloge locale HL/32. L'entrée D de la bascule 5 est connectée à la sortie Q de la bascule 4, l'entrée D de la bascule 6 est connectée à la sortie Q de la bascule 5, et l'entrée D de la bascule 7 est connectée à la sortie Q de la bascule 6.

Les moyens de détection 50 consistent en un circuit de décodage d'un état "0" du signal Q4 sur trois fenêtres de comptage consécutives, consistant lui même en une porte "non ET" à trois entrées connectées respectivement aux sorties Q5 de la bascule 5, Q6 de la bascule 6, et Q7 de la bascule 7.

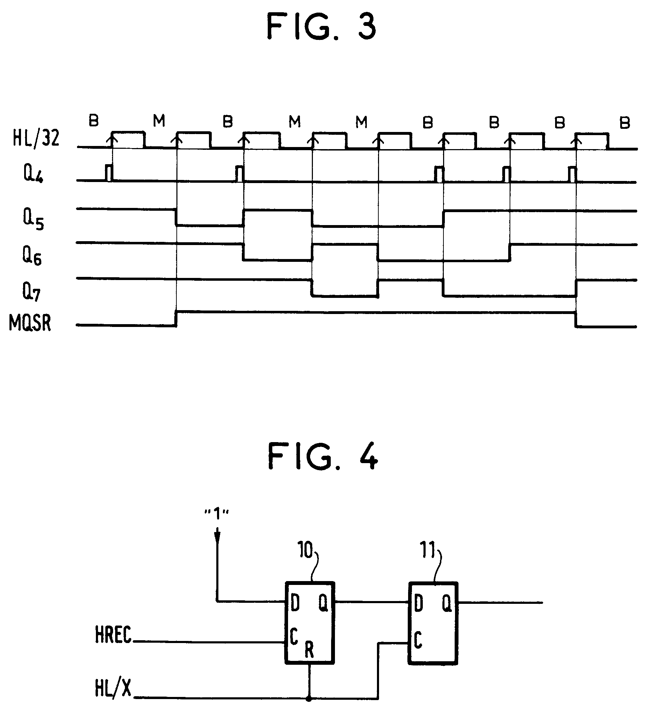

Le chronogramme de la figure 3 représente à titre d'exemple huit fenêtres de comptage consécutives, et l'état correspondant des signaux Q4, Q5, Q6, Q7. Pour chacune de ces fenêtres une détection de perte de signal de réception a été repérée par la référence M, et une détection d'absence de perte de signal de réception a été repérée par la référence B. A titre d'exemple une succession MBMMBBBB a été envisagée, faisant par hypothèse suite à un état B correspondant à une reprise de signal.

Comme illustré sur la figure 3, le signal MQSR de sortie de la porte "non ET" 50 étant initialement au niveau logique "0" (pour un état correspondant à une reprise de signal de réception) ce signal MQSR passe du niveau "0" au niveau "1" à la fin de la première fenêtre de comptage marquée par un état M, et ne repasse ensuite au niveau "0" qu'au bout de trois fenêtres de comptage consécutives marquées par un état B, fournissant ainsi un moyen de détection de perte ou de reprise de signal de réception.

Un autre exemple de dispositif de détection de perte de signal de réception consiste en une variante du schéma de la figure 1, qui est représentée sur la figure 4, et dans laquelle les moyens de comptage 10 et les moyens de détection 30de passage de ces moyens de comptage par un état prédéterminé ont été remplacés par des moyens de détection d'au moins une impulsion du signal d'horloge de réception et par des moyens de comparaison du résultat de cette détection par rapport à un état prédéterminé attendu en cas de perte, ou d'absence de perte, du signal de réception.

Ces moyens de détection comportent une bascule 10 du type "D" dont l'entrée d'horloge C reçoit le signal d'horloge de réception reconstitué HREC, dont l'entrée "D" est mise au niveau logique "1", et dont l'entrée R de remise à zéro reçoit un signal d'horloge HL/X (X étant égal à 32 dans le cas de la figure 1).

Le dispositif représenté sur la figure 4 comporte également une bascule 11 du type "D", dont l'entrée D est reliée à la sortie Q de la bascule 10, et dont l'entrée d'horloge C reçoit le signal HL/X. Cette bascule 11 assure la mémorisation, sur une fenêtre d'observation de largeur HL/X, du résultat de la détection effectuée par la bascule 10.

Lorsqu'au moins une impulsion du signal HREC a été détectée sur une fenêtre d'observation, le signal de sortie de la bascule 11 relativement à cette fenêtre d'observation est au niveau logique "1". Dans le cas contraire il est au niveau "0". Ceci permet donc d'assurer l'opération de comparaison évoquée plus haut.

Le choix de la valeur X, c'est-à-dire de la largeur de la fenêtre d'observation du signal HREC, détermine la sensibilité d'un tel dispositif de détection de perte, ou d'absence de perte, de signal de réception ; il en est de même dans le cas de la figure 1 du choix de l'état de comptage à partir duquel est décidée une perte, ou une absence de perte, du signal de réception.

## Revendications

1. Dispositif de détection de perte de signal de réception, pour récepteur de signaux numériques comportant un dispositif de reconstitution d'horloge de réception, caractérisé en ce qu'il comporte :
- une horloge locale (20) plésiochrone avec le signal d'horloge de réception, ce dernier étant reconstitué de manière à présenter une absence d'impulsions en cas de perte du signal de réception,
- des moyens de détection (10) d'au moins une impulsion du signal d'horloge de réception au cours d'une fenêtre d'observation de ce signal incluant un nombre déterminé d'impulsion du signal d'horloge locale,
- des moyens de comparaison (30) du résultat de cette détection par rapport à un état prédéterminé attendu en cas de perte du signal de réception ou en cas d'absence de perte de signal de réception.

2. Dispositif selon la revendication 1, caractérisé en ce que :
- les moyens de détection d'au moins une impulsion du signal d'horloge de réception comportent des moyens (10) de comptage d'impulsions du signal d'horloge de réception pendant une fenêtre de comptage comprenant A périodes consécutives du signal d'horloge locale,
- les moyens de comparaison comportent des moyens (30) de détection de passage de ces moyens de comptage (10) par un état de comptage prédéterminé au plus égal à A-1 pendant ladite fenêtre de comptage, auquel cas le signal de sortie de ces moyens de détection (30) indique une absence de perte de signal de réception, une perte de signal de réception étant indiquée dans le cas contraire.

3. Dispositif selon la revendication 2, caractérisé en ce qu'il comporte en outre :
- des moyens (40) de mémorisation du signal de sortie desdits moyens de détection (30) sur plusieurs fenêtres de comptage consécutives,
- des moyens (50) de détection d'un état des signaux ainsi mémorisés correspondant à une absence de perte de signal de réception sur chacune des fenêtres de comptage considérées, auquel cas le signal de sortie de ces derniers moyens de détection (50) indique une reprise de signal de réception, une perte de signal de réception étant indiquée dans le cas contraire.

4. Dispositif selon la revendication 3, caractérisé en ce que le nombre de fenêtres de comptage consécutives est égal à trois.

## Claims

1. A circuit for detecting received signal loss in a digital signal receiver including a circuit for reconstituting the receive clock, characterized in that it comprises:
a local clock (20) which is quasi-synchronous with the receive clock signal, the receive clock signal being reconstituted in such a manner as to manifest an absence of pulses in the event of received signal loss;
detector means (10) for detecting at least one pulse of the receive clock signal during an observation window for said signal, the observation window including a determined number of pulses of the local clock signal; and
comparator means (30) for comparing the result of said detection with a predetermined state expected in the event of received signal loss or in the event of absence of received signal loss.

2. A circuit according to claim 1, characterized in that the detector means for detecting at least one pulse of the receive clock signal comprise counter means (10) for counting pulses of the receive clock signal during a count window comprising A consecutive periods of the local clock signal; and
the comparator means comprise detector means (30) for detecting the passage of said counter means (10) through a predetermined count state not greater than A-1 during said count window, in which case the output signal from said detector means (30) indicate absence of received signal loss, whereas otherwise they indicate received signal loss.

3. A circuit according to claim 2, characterized in that it further includes:
storage means (40) for storing the output signal from said detector means (30) over a plurality of consecutive count windows; and
detector means (50) for detecting a state of the signals stored in this way corresponding to absence of received signal loss over each of the count windows under consideration, in which case the output signal from said last-mentioned detector means (50) indicates that the signal is being received, whereas otherwise it indicates that the received signal has been lost.

4. A circuit according to claim 3, characterized in that the number of consecutive count windows is equal to three.

## Patentansprüche

1. Einrichtung zur Erfassung des Empfangssignalverlusts für Empfänger von digitalen Signalen, der eine Empfangstaktwiedergewinnungseinrichtung enthält, dadurch gekennzeichnet, daß sie aufweist:
- einen lokalen Taktgeber (20), der mit dem Empfangstaktsignal plesiochron arbeitet, wobei das Taktsignal derart wiedergewonnen wird, daß es im Fall des Empfangssignalverlustes keine Impulse aufweist,
- Mittel (10) zur Erfassung mindestens eines Impulses des Empfangstaktsignals im Verlauf eines Beobachtungsfensters dieses Signals unter Einbeziehung einer bestimmten Anzahl von Impulsen des lokalen Taktsignals, und
- Mittel (30) zum Vergleichen des Ergebnisses dieser Erfassung mit einem erwarteten vorbestimmten Zustand im Fall des Enmpfangssignalverlusts oder im Fall des Fehlens eines Enmpfangssignalverlusts.

2. Einrichtung nach Anspruch 1, dadurch gekennzeichnet, daß
- die Mittel zur Erfassung mindestens eines Impulses des Empfangstaktsignals Mittel (10) zum Zählen der Impulse des Empfangstaktsignals während eines Zählfensters enthalten, das A aufeinanderfolgende Perioden des lokalen Taktsignals umfaßt,
- die Vergleichsmittel Mittel (30) zur Erfassung des Durchgangs dieser Zählmittel (10) durch einen vorbestimmten Zählstand von höchstens A-1 während des genannten Zählfensters aufweisen, und daß in diesem Fall das Ausgangssignal der Erfassungsmittel (30) ein Fehlen des Empfangssignalverlusts anzeigt, während im entgegengesetzten Fall ein Empfangssignalverlust angezeigt wird.

3. Einrichtung nach Anspruch 2, dadurch gekennzeichnet, daß sie weiter aufweist:
- Mittel (40) zum Speichern des Ausgangssignals der Mittel (30) zur Erfassung über mehrere aufeinanderfolgende Zählfenster,
- Mittel (50) zur Erfassung eines Zustands der so gespeicherten Signale entsprechend dem Fehlen des Empfangsverlustsignals in allen betrachteten Zählfenstern, wobei in diesem Fall das Ausgangssignal der Erfassungsmittel (50) eine Wiederkehr des Empfangssignals anzeigt, während im entgegengesetzten Fall ein Verlust des Empfangssignals angezeigt wird.

4. Einrichtung nach Anspruch 3, dadurch gekennzeichnet, daß die Anzahl der aufeinanderfolgenden Zählfenster gleich drei ist.
